# DEMANDE DE BREVET EUROPEEN

(11) **EP 1 917 899 A1**
(43) Date de publication de la demande: **07.05.2008**
(21) Numéro de dépôt: 07117026.0
(22) Date de dépôt: 24.09.2007
(51) Int. Cl.: A47L 15/24

(54) **Machine à laver la vaisselle et pompe à chaleur**

(30) Priorité: 30.10.2006 FR 0654628
(71) Demandeur: Constructions Isothermiques Bontami - C.I.B., 02100 Saint-Quentin (FR)
(72) Inventeur: Covin, Frédéric, 02800 Vendeuil (FR)
(74) Mandataire: Bloch, Gérard

(57) **Abrégé**

Machine à laver 1 la vaisselle, comprenant au moins une partie de lavage 2 et une partie de rinçage 3 définissant un tunnel 4, et une pompe à chaleur 18 pourvue d'un condenseur 23 capable de chauffer l'eau et d'un évaporateur 17 capable de refroidir l'air de sortie d'un mélangeur d'air.

## Description

La présente invention concerne notamment le domaine des laveries notamment d'établissements accueillant du public et conçues pour nettoyer de grandes quantités de plats et/ou de couverts.

Dans une laverie, est, en général, disposé un lave-vaisselle, et, le cas échéant d'autres équipements.

La vaisselle peut être empilée sur des casiers ou porte-assiettes entraînés par un transporteur dans plusieurs compartiments du lave-vaisselle. Un exemple de lave-vaisselle est décrit dans le document FR 2 158 525. Ce lave-vaisselle est muni d'un appareil destiné à diminuer la température et l'humidité de l'air sortant du lave-vaisselle, avec un échangeur de chaleur comprenant un serpentin, des organes destinés à diriger un liquide refroidissant dans le serpentin, des organes destinés à aspirer l'air chaud et humide sortant de la machine à laver dans l'échangeur de chaleur pour refroidir cet air et éliminer son humidité, et avec des éléments situés en aval de l'échangeur de chaleur pour introduire dans l'appareil un courant d'air supplémentaire formant un mélange avec l'air sortant du lave-vaisselle et des éléments pour diriger ce mélange dans l'air ambiant.

La demanderesse s'est rendue compte que la température de l'air dans une machine à laver de type tunnel n'était pas suffisamment élevée pour chauffer suffisamment l'eau. La demanderesse s'est également aperçue que la laverie restait relativement chaude et humide, ce qui s'avère néfaste tant pour la santé du personnel que pour la bonne conservation des locaux et le respect des règles d'hygiène.

La présente invention vise à remédier aux inconvénients évoqués ci-dessus.

La présente invention vise à obtenir une laverie plus saine.

La machine à laver la vaisselle comprend au moins une partie de lavage et une partie de rinçage définissant un tunnel, et une pompe à chaleur pourvue d'un condenseur de chauffage de l'eau destinée au traitement de la vaisselle et d'un évaporateur de refroidissement de l'air de sortie d'un mélangeur d'air.

Le lave-vaisselle présente une faible consommation d'énergie et relâche une quantité de chaleur et d'humidité réduites, d'où une atmosphère plus fraîche et plus sèche dans la laverie.

Une conduite d'air peut relier une sortie de la partie de rinçage à l'entrée de l'échangeur thermique air/eau.

Une conduite d'air peut relier une sortie de la partie de lavage à l'entrée de l'échangeur thermique air/eau. Le condenseur est relié à la sortie d'eau de l'échangeur thermique air/eau et forme un moyen de chauffage de l'eau du lave-vaisselle. L'eau chauffée de sortie du condenseur est ensuite envoyée vers la partie de rinçage et/ou vers la partie de lavage. Le mélangeur peut être intégré à l'évaporateur ou disposé en amont.

Dans un mode de réalisation, la machine à laver comprend en outre une partie de prélavage et/ou une partie de séchage.

Dans un mode de réalisation, la machine à laver comprend un échangeur thermique air/eau pour refroidir de l'air provenant du tunnel, en amont de l'évaporateur et préchauffer de l'eau destinée au traitement de la vaisselle en amont du condenseur.

Dans un mode de réalisation, le mélangeur reçoit l'air en provenance du tunnel et de l'air ambiant.

La présente invention concerne également une pompe à chaleur pour machine à laver la vaisselle et une pompe à chaleur de climatisation d'un local. La pompe à chaleur comprend un condenseur de chauffage d'eau, un évaporateur de refroidissement d'air, et un mélangeur d'air comprenant une entrée disposée dans un local et une entrée disposée dans une machine, par exemple une machine à laver la vaisselle, disposée dans le local, le mélangeur étant disposé en amont de l'évaporateur pour alimenter ledit évaporateur par un mélange d'air, la sortie du condenseur étant reliée à la machine pour alimenter la machine en eau chaude.

Dans un mode de réalisation, la pompe à chaleur comprend, en amont de l'évaporateur, un échangeur thermique air/eau pour refroidir de l'air provenant de l'entrée disposée dans une machine disposée dans le local, et préchauffer de l'eau en amont du condenseur.

Dans un mode de réalisation, la pompe à chaleur comprend un échangeur thermique air/eau pour refroidir de l'air en amont du mélangeur et préchauffer l'eau en amont du condenseur.

Une partie d'air provenant d'une machine disposée dans la laverie et une partie d'air ambiant sont introduits dans l'évaporateur et refroidis pour être ensuite relâchés dans la laverie. De la sorte, la laverie, c'est-à-dire la pièce où se trouve le lave-vaisselle, peut être maintenue à une température de l'ordre de 20 degrés, agréable pour le personnel, satisfaisante d'un point de vue bactériologique et ne conduisant pas à une dégradation accélérée des locaux, et ce alors que les températures couramment atteintes dans les laveries conventionnelles sont de l'ordre de 30 à 40 degrés avec un air très humide. Non seulement l'air de l'intérieur de la machine est refroidi pour être relâché dans la laverie et non à l'extérieur mais en plus, une partie d'air ambiant est introduite dans l'évaporateur pour être refroidie et relâchée dans la laverie.

Une soufflante pour la circulation de l'air dans les conduites d'air peut être prévue, par exemple en sortie de l'évaporateur.

Dans un mode de réalisation, la pompe à chaleur comprend une unité de commande prévue pour commander le condenseur, l'évaporateur, le ventilateur et une vanne d'entrée d'eau fraîche. L'unité de commande peut également être prévue pour commander le fonctionnement d'une machine à laver.

Une unité de commande peut être configurée pour commander la proportion d'air refroidi en provenance de la machine et la proportion d'air ambiant dans le mélangeur.

Dans un mode de réalisation, la pompe à chaleur comprend une vanne mélangeuse à deux entrées.

Dans un mode de réalisation, la pompe à chaleur comprend une vanne mélangeuse à une entrée, disposée sur une conduite d'air ambiant.

Dans un mode de réalisation, le mélangeur reçoit l'air en provenance de la machine et de l'air ambiant.

La pompe à chaleur est adaptée pour coopérer avec une machine à laver, notamment pour la vaisselle. La pompe à chaleur prélève de l'énergie dans le local et dans un premier fluide la machine et restitue de l'énergie à un deuxième fluide de la machine. La pompe à chaleur peut être adaptée à des machines à laver.

Grâce à l'invention, de substantielles économies d'énergie sont réalisées, les conditions de travail du personnel présent dans le local sont améliorées, la durée de vie des équipements est prolongée en raison de la baisse de la température et de l'humidité dans le local, d'où une réduction significative des frais de fonctionnement de la machine et des frais d'amortissement du local.

La présente invention sera mieux comprise à la lecture de la description détaillée de quelques modes de réalisation pris à titre d'exemples nullement limitatifs et illustrés par les dessins annexés, sur lesquels :
- la figure 1 est une vue schématique d'une machine à laver selon un aspect de l'invention ;
- la figure 2 est une vue de détail d'une variante de la figure 1; et
- la figure 3 est une vue de détail d'une autre variante de la figure 1 .

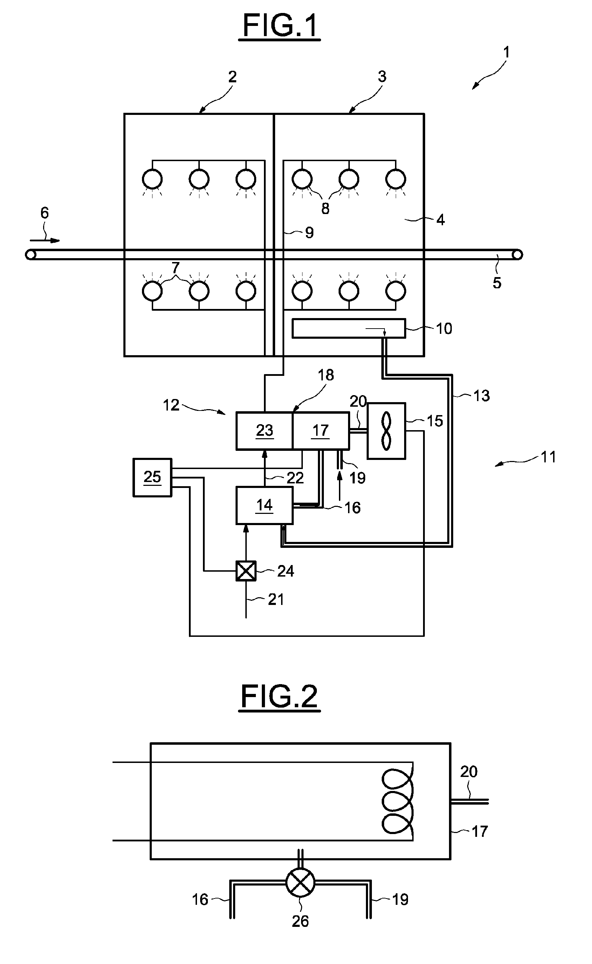

Comme on peut le voir sur la figure 1, la machine à laver comprend une partie de lavage 2 et une partie de rinçage 3 formant un tunnel 4 par lequel peuvent passer des casiers chargés de vaisselle sale en vue de leur lavage. Les casiers de vaisselle sale peuvent se déplacer sur un transporteur 5 dans le sens de la flèche 6. Le transporteur 5 peut faire partie de la machine à laver 1. En option, peut être prévue une partie de prélavage non représentée disposée en amont de la partie de lavage 2 et/ou une partie de séchage non représentée disposée en aval de la partie de rinçage 3.

La partie de lavage 2 comprend une pluralité de buses 7 alimentées par un circuit d'eau chaude en provenance d'une alimentation en eau ou d'un recyclage de l'eau de rinçage. La partie de rinçage 3 comprend une pluralité de buses de rinçage 8 alimentées par un circuit d'eau de rinçage 9 à une température relativement élevée, par exemple comprise entre 70 et 90 degrés. La partie de rinçage 3 est également munie d'une bouche d'aspiration d'air 10 permettant d'éviter que l'air chaud et humide à l'intérieur du tunnel 4 ne sorte par l'amont ou par l'aval et ne vienne condenser sur des surfaces froides de la pièce de laverie dans laquelle se trouve la machine à laver 1.

La machine à laver 1 comprend un circuit de refroidissement d'air 11 et un circuit de réchauffage d'eau 12 couplé au circuit de refroidissement d'air 11. Le circuit de refroidissement d'air 11 comprend une conduite 13 dont l'entrée est reliée à la bouche d'aspiration 10, un échangeur de chaleur 14 commun avec le circuit de chauffage 12 et recevant en entrée la sortie de la conduite 13, une conduite d'air 16 reliée à la sortie d'air de l'échangeur thermique 14 et débouchant dans l'entrée d'un évaporateur 17 faisant partie d'une pompe à chaleur 18. Une conduite 19 de prélèvement d'air ambiant est également disposée en entrée de l'évaporateur 17. La sortie 20 de l'évaporateur 17 débouche dans l'air ambiant au voisinage de la machine à laver. Une soufflante 15 est disposée sur la sortie 20 pour forcer l'écoulement de l'air.

Le circuit de chauffage d'eau 12 comprend une conduite d'entrée 21 reliée à une alimentation en eau fraîche, c'est-à-dire à température ambiante et non souillée. La conduite 21 débouche dans l'échangeur thermique 14. Une conduite 22 est disposée entre la sortie eau de l'échangeur thermique 14 et l'entrée d'un condenseur 23 faisant partie de la pompe à chaleur 18. La sortie du condenseur 23 est reliée au circuit d'eau 9 alimentant les buses 8 de la partie de rinçage 3.

En outre, une vanne 24 est disposée sur la conduite d'entrée d'eau fraîche 21 et une unité centrale 25 est prévue pour le pilotage de la vanne 24, de l'évaporateur 17, du condenseur 23 et de la soufflante 15. L'unité de commande 25 peut également être prévue pour commander les différentes fonctions de la partie de lavage 2 et de la partie de rinçage 3, notamment le débit et la température de l'eau.

L'échangeur thermique reçoit de l'air chaud en provenance de l'intérieur du tunnel 4, plus particulièrement de l'intérieur de la partie de rinçage 3 et de l'eau fraîche à une température ambiante, par exemple de l'ordre de 15 à 20 degrés. En sortie de l'échangeur thermique, l'eau peut être à une température de l'ordre de 40 à 50 degrés dans la conduite 22 et l'air dans la conduite d'air 16 peut présenter une température de l'ordre de 25 à 35 degrés. La pompe à chaleur 18 permet de prélever de l'énergie dans l'air provenant de la conduite 16 et dans l'air ambiant provenant de la conduite 19 et de restituer ladite énergie à l'eau provenant de la conduite d'eau 22. En sortie du condenseur 23, la température de l'eau peut être de l'ordre de 65 à 75 degrés. En sortie de l'évaporateur 17, la température d'air peut être de 15 à 25 degrés.

Dans le mode de réalisation illustré sur la figure 1, l'évaporateur 17 assure également une fonction de mélange de l'air provenant de la conduite d'air 16 et de l'air ambiant provenant de la conduite 19. L'air ambiant provenant de la conduite 19 peut être à une température de l'ordre de 20 à 35 degrés. Il s'avère d'autant plus intéressant de prélever de l'énergie dans l'air ambiant par l'intermédiaire de la conduite 19 que la température de l'air ambiant est élevée et augmente par conséquent le rendement de la pompe à chaleur 18.

Dans le mode de réalisation illustré sur la figure 2, un mélangeur 26, sous la forme d'une vanne manuelle ou, en option, pilotée par l'unité de commande 25, est disposée en amont de l'évaporateur 17. Les conduites d'air 16 et 19 débouchent dans la vanne mélangeuse 26 dont la sortie est reliée à l'entrée de l'évaporateur 17.

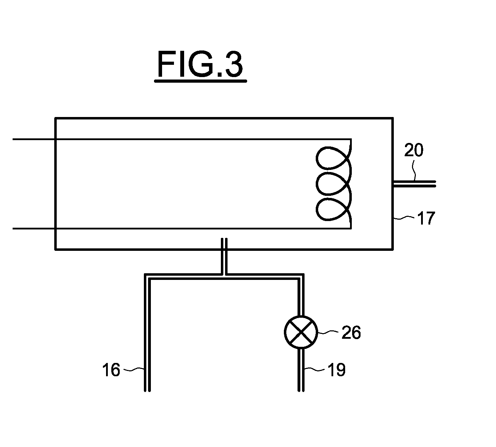

Dans le mode de réalisation illustré sur la figure 3, le mélangeur 26 comprend une vanne manuelle disposée sur la conduite d'air 19. Les conduites d'air 16 et 19 se rejoignent en amont de l'évaporateur 17. Le mélangeur 26 agissant sur le débit d'air provenant de l'extérieur règle indirectement les proportions du mélange d'air.

L'ensemble pompe à chaleur peut comprendre, outre la pompe à chaleur 18, la soufflante 15, la conduite de sortie 20, les conduites d'entrée 16 et 19, et la conduite d'eau 22. L'ensemble pompe à chaleur peut comprendre l'échangeur thermique 14 et la conduite d'eau 21.

Grâce à l'invention, l'énergie nécessaire au chauffage de l'eau chaude utilisée par la machine à laver est récupérée dans l'air à l'intérieur du tunnel 4 formé par la machine à laver 1 et dans l'air ambiant, d'où une réduction de la consommation d'énergie de chauffage de l'eau. En surplus, l'air ambiant est refroidi, d'où des gains importants en termes d'agrément de travail du personnel, d'hygiène et de tenue au vieillissement de la laverie. Le fait de prélever de l'air ambiant pour le faire passer dans l'évaporateur en mélange avec de l'air prélevé dans la laveuse permet, outre le refroidissement de l'air ambiant, également de prélever de l'énergie dans l'air ambiant pour la fournir à l'eau qui doit être chauffée. La consommation d'énergie et les frais de fonctionnement de la pompe à chaleur sont donc particulièrement réduits.

## Revendications

1. Machine à laver (1) la vaisselle, comprenant au moins une partie de lavage (2) et une partie de rinçage (3) définissant un tunnel (4), **caractérisé par le fait qu'**elle comprend une pompe à chaleur (18) pourvue d'un condenseur (23) de chauffage de l'eau destinée au traitement de la vaisselle et d'un évaporateur (17) de refroidissement de l'air de sortie d'un mélangeur d'air.

2. Machine selon la revendication 1, comprenant un échangeur thermique (14) air/eau pour refroidir de l'air provenant du tunnel (4), en amont de l'évaporateur (17) et préchauffer de l'eau destinée au traitement de la vaisselle en amont du condenseur (23).

3. Machine selon la revendication 2, comprenant une conduite d'air reliant une sortie de la partie de rinçage (3) à l'entrée de l'échangeur thermique (14) air/eau et/ou une conduite d'air reliant la partie de lavage à une entrée de l'échangeur thermique (14) air/eau.

4. Machine selon l'une quelconque des revendications précédentes, dans laquelle le mélangeur reçoit l'air en provenance du tunnel (4) et de l'air ambiant.

5. Pompe à chaleur de climatisation d'un local, **caractérisée par le fait qu'**elle comprend un condenseur (23) de chauffage d'eau, un évaporateur (17) de refroidissement d'air, et un mélangeur d'air comprenant une entrée disposée dans le local et une entrée disposée dans une machine disposée dans le local, le mélangeur étant disposé en amont de l'évaporateur (17) pour alimenter ledit évaporateur (17) par un mélange d'air, la sortie du condenseur étant reliée à la machine pour alimenter la machine en eau chaude.

6. Pompe à chaleur selon la revendication 5, comprenant, en amont de l'évaporateur (17), un échangeur thermique (14) air/eau pour refroidir de l'air provenant de l'entrée disposée dans une machine disposée dans le local, et préchauffer de l'eau en amont du condenseur (23).

7. Pompe à chaleur selon la revendication 5 ou 6, comprenant un échangeur thermique (14) air/eau pour refroidir de l'air en amont du mélangeur et préchauffer l'eau en amont du condenseur (23).

8. Pompe à chaleur selon l'une quelconque des revendications 5 à 7, comprenant une unité de commande (25) capable de commander la proportion d'air en provenance de l'entrée disposée dans le local et en provenance de l'entrée disposée dans une machine disposée dans le local, dans le mélangeur.

9. Pompe à chaleur selon l'une quelconque des revendications 5 à 8, comprenant une vanne mélangeuse (26) à deux entrées.

10. Pompe à chaleur selon l'une quelconque des revendications 5 à 8, comprenant une vanne mélangeuse (26) à une entrée, disposée sur une conduite d'air ambiant.
